# EUROPEAN PATENT APPLICATION

(11) **EP 0 955 510 A1**
(43) Date of publication of application: **10.11.1999**
(21) Application number: 99201411.8
(22) Date of filing: 05.05.1999
(51) Int. Cl.: F26B 25/00, A23K 3/02

(54) **Method of conserving plants**

(30) Priority: 08.05.1998 NL 1009119
(71) Applicant: Reuvekamp, Bernardus Johannes Maria, 8141 PL Heino (NL)
(72) Inventor: Reuvekamp, Bernardus Johannes Maria, 8141 PL Heino (NL)
(74) Representative: Schumann, Bernard Herman Johan

(57) **Abstract**

The invention relates to a method of conserving plants such as grasses and herbs, comprising the steps of:
- harvesting the plants,
- sterilizing and drying the plants at increased temperature to a moisture content in the range of 17%-60% moisture, and
- packing the dried plants such that the dried plants are protected from external influences, for instance are packed in airtight manner.

Thus is achieved that plants such as grasses and herbs can be kept fresh for a long period of time.

## Description

The invention relates to a method of conserving plants such as grasses and herbs.

Such a method is normally applied in grass-drying installations. Mown grass is herein dried by means of hot air, whereby the moisture content is reduced to below 17%. This dried grass can then be packed in an airtight foil, whereafter it can be stored or transported in portions.

A drawback to this method is that the grass loses its green colour and nutrients such as proteins are herein destroyed by the high temperature. These nutrients are however important when the dried grass is given as supplementary feed to cattle. These and other drawbacks are prevented according to the invention by a method of conserving plants such as grasses and herbs, comprising the steps of:
- harvesting the plants,
- sterilizing and drying the plants at increased temperature to a moisture content in the range of 17%-60% moisture, and
- packing the dried plants such that the dried plants are protected from external influences, for instance are packed in airtight manner.

It has been found that by drying with hot air the bacteria are killed and the nutrients can still be retained as long as the grass is not dried to below a moisture content of 17%. It is hereby possible to pack the grass, wherein nutrients are retained and the grass will not decay in the airtight packaging.

According to a preferred embodiment of the method according to the invention the dried plants have a temperature during packing which is higher than the ambient temperature. After cooling of the packed, dried plants this will result in conservation due to underpressure in the packaging, whereby the dried plants can be stored longer in their packaging.

According to a further preferred embodiment according to the invention the plants are dried within 12 hours of harvesting thereof. The action of bacteria is hereby limited to a minimum, whereby the plants have optimum freshness after conservation.

According to the prior art it is usual to dry the plants such as grass with hot air at a temperature of about 800°C. According to the present invention, however, the plants are dried in a preferred embodiment with hot air at a temperature in the range of 100°C and 700°C. Less damage to the crop hereby occurs and the nutrients are retained more effectively.

A belt drier or a drum drier can for instance be used to dry the plants. The advantage of a belt drier is that plants of considerable length can be dried; a drum drier on the other hand only functions with plants of a small length.

As stated, grass can be dried with the method according to the invention to form cattle fodder for instance for cattle or horses. It is however also possible using the method according to the invention to dry herbs which can be used for instance in the pharmaceutical industry. It is hereby possible to store herbs without losing freshness.

The plants conserved with the method according to the invention are preferably placed in a packaging which is provided with a labyrinth closure. This closure comprises a number of sealing seams which do not extend over the whole length of the opening. The part of the opening not closed by a sealing seam is situated alternately on the one or the other side of the opening. This creates a labyrinthine opening through which possible overpressure in the packaging can be discharged to the outside but through which no bacteria can enter the packaging from outside.

The present invention will be elucidated hereinbelow with reference to the annexed drawings.

Fig. 1 shows an apparatus for performing the method.

Fig. 2 and 3 show an enlarged perspective view of the packing device.

Fig. 4 shows a packaging which can enclose plants obtained according to the present method.

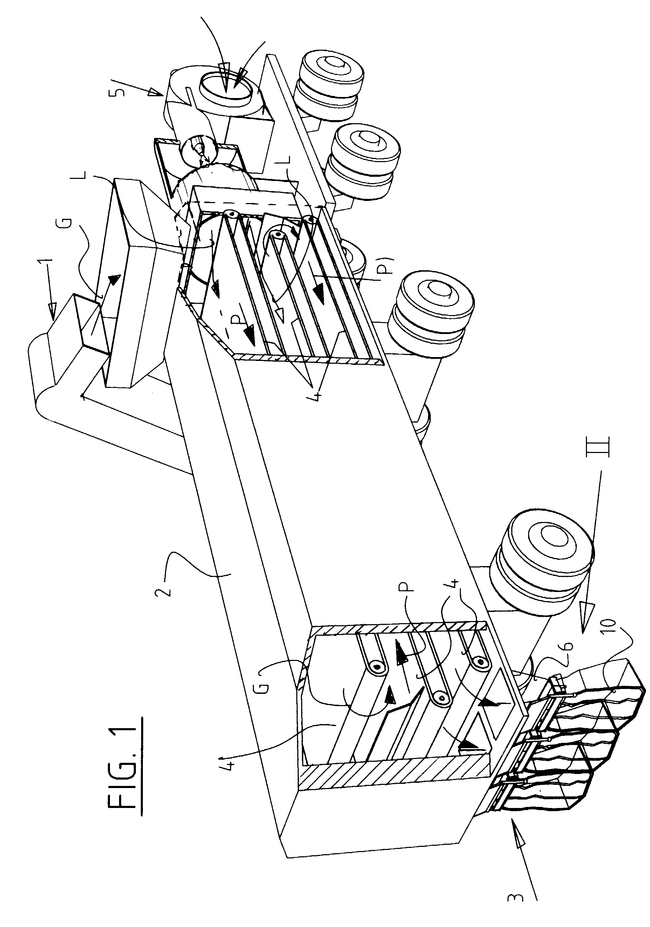

Fig. 1 shows a mobile apparatus for performing the method according to the invention. This apparatus comprises a feed device 1 for supplying the harvested plants, in this case grass, a drying installation 2 for sterilizing and drying the grass at increased temperature and a packing device 3 for packing the grass. Feed device 1 comprises a conveyor belt over which the grass G is carried into drying installation 2. As shown, this drying installation 2 is preferably a belt drier. This belt drier consists of a number of conveyor belts 4 arranged one above another over which the grass is transported in the direction of arrows P. By arranging conveyor belts 4 in shifted position relative to each other it is possible to turn the grass over. This reversing takes place in that the grass drops from one conveyor belt onto a conveyor belt lying thereunder, wherein grass G is turned over during the fall.

Drying installation 2 further comprises a hot air feed 5 which blows hot air at a temperature of above 100°C into the housing of drying installation 2 as according to arrows L. Grass with the desired moisture content is obtained due to this circulation of hot air at a determined temperature and by turning over the grass and transporting the grass at a determined speed over the conveyor belts.

This dried grass is then transported to the packing device 3. This latter comprises a funnel-like filling tube 6 and welding members 7 for holding and sealed closure of a bag 10.

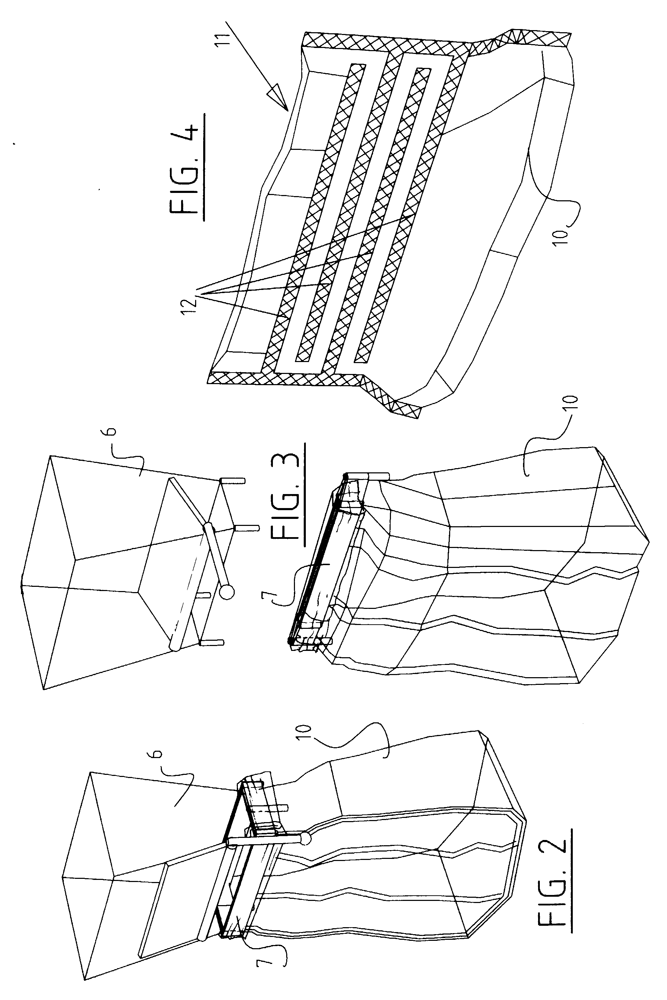

Figure 2 shows the filling position of welding members 7 which in this position, together with filling tube 6, fixedly hold a bag 10 for filling.

Figure 3 shows the sealing position of the welding members. In this position welding members 7 are heated, for instance electrically, and the opening is pressed closed by moving welding members 7 toward each other such that the plastic foil of bag 10 fuses together and a good seal is obtained.

Figure 4 shows a bag 10 with a preferred closure 11. This closure is made by for instance the welding members 7 of packing device 3. Closure 11 of bag 10 takes the form of a labyrinth, which closure consists of a number of sealing seams 12 in mutually parallel arrangement. These sealing seams extend alternately from the one side or the other side of bag 10 to a position close to the opposite side of the bag. This results in a closure wherein air can escape to the outside when there is overpressure in the bag but wherein due to the stiffness of the foil from which the bag is manufactured a good sealing of the bag against external influences is obtained.

## Claims

1. Method of conserving plants such as grasses and herbs, comprising the steps of:
- harvesting the plants,
- sterilizing and drying the plants at increased temperature to a moisture content in the range of 17%-60% moisture, and
- packing the dried plants such that the dried plants are protected from external influences, for instance are packed in airtight manner.

2. Method as claimed in claim 1, wherein the dried plants have a temperature during packing which is higher than the ambient temperature.

3. Method as claimed in claim 2, wherein the temperature of the plants is at least 10°C higher than the ambient temperature.

4. Method as claimed in claim 1, wherein the step of harvesting the plants is followed within 12 hours by the step of drying.

5. Method as claimed in claim 1, wherein the plants are dried by means of flow-pass of a gas.

6. Method as claimed in claim 5, wherein the gas has a temperature in the range of 100°C-700°C.

7. Method as claimed in claim 1, wherein the plants are packed airtightly in a plastic foil, preferably polyethylene.

8. Packaging comprising plants with a moisture content in the range of 17%-60% moisture which is obtained in accordance with the method of claim 1.

9. Packaging as claimed in claim 8, wherein the foil is closed with a labyrinth closure comprising sealing seams extending from the one side and from the other side of the closure to a position close to the opposite side such that gas present in the packaging due to overpressure can escape from the packaging and that gas cannot enter the packaging.
